# EUROPEAN PATENT APPLICATION

(11) **EP 4 529 990 A2**
(43) Date of publication of application: **02.04.2025**
(21) Application number: 24198890.6
(22) Date of filing: 06.09.2024
(51) Int. Cl.: B05C 5/02, H01M 4/04

(54) **SLOT DIE COATER AND ELECTRODE PLATE OF RECHARGEABLE BATTERY AND CERAMIC INSULATOR**

(30) Priority: 08.09.2023 KR 20230119985; 09.08.2024 KR 20240107191
(71) Applicant: Samsung SDI Co., Ltd, Gyeonggi-do 17084 (KR)
(72) Inventor: KWAK, Junhyeok, 17084 Yongin-si (KR)
(74) Representative: Marks & Clerk LLP

(57) **Abstract**

A slot die coater including a bottom and top die coupled in a top-bottom direction, the bottom and top die forming a coated portion by coating an active material slurry on an electrode substrate, and discharging a ceramic insulating material to a boundary of the coated portion and an uncoated portion; and a spacer including an active material discharge portion between the bottom and top die and providing an active material discharge port that discharges the active material slurry, and a ceramic material discharge portion providing a ceramic discharge port that discharges the ceramic insulating material, wherein the active material discharge port is at a center of the electrode substrate, the ceramic discharge port is on sides of the active material discharge port, and the ceramic discharge port forms the ceramic insulation layer by overlapping the ceramic insulation layer on the coated portion at ends.

## Description

### BACKGROUND

### 1. Field

Embodiments relates to a slot die coater and an electrode plate of a rechargeable battery and a ceramic insulator.

### 2. Description of the Related Art

A rechargeable battery is a battery that may be repeatedly charged and discharged, unlike a primary battery. A small capacity rechargeable battery may be used in a small portable electronic device such as a mobile phone, a notebook computer, or a camcorder, and a large capacity rechargeable battery may be used as a power source for driving a motor of a hybrid vehicle and an electric vehicle.

For example, the rechargeable battery may include an electrode assembly for charging and discharging, a pouch accommodating the electrode assembly, and an electrode tab that electrically connects the electrode assembly and draws it out of the pouch. The electrode assembly may be a winding type in which a negative electrode plate and a positive electrode plate are wound with a separator interposed therebetween, or a stacking type in which a negative electrode plate and a positive electrode plate are stacked with a separator interposed therebetween.

### SUMMARY

The embodiments may be realized by providing a slot die coater including a bottom die and a top die disposed in a top-bottom direction and coupled to each other, the bottom die and the top die being configured to form a coated portion by coating an active material slurry on an electrode substrate, and to discharge a ceramic insulating material to a boundary of the coated portion and an uncoated portion to form a ceramic insulation layer; and a spacer including an active material discharge portion between the bottom die and the top die, the active material discharge portion providing an active material discharge port that is configured to discharge the active material slurry, and a ceramic material discharge portion providing a ceramic discharge port that is configured to discharge the ceramic insulating material, wherein the active material discharge port is at a center of the electrode substrate in a width direction, the ceramic discharge port is on respective sides of the active material discharge port in the width direction, and the ceramic discharge port is configured to form the ceramic insulation layer by overlapping the ceramic insulation layer on the coated portion at respective ends in the width direction.

The spacer may provide a first gap at the active material discharge port, and a second gap at the ceramic discharge port, the second gap being smaller than the first gap.

The second gap may be at a position that is above 1/2 a height of the first gap.

The active material discharge port may be configured to discharge an active material slurry that has passed through a chamber in the bottom die, and the ceramic discharge port may be configured to discharge a ceramic insulating material supplied to the spacer and that has passed through the top die.

The spacer may include a first supply passage on a side of the top die, a second supply passage connected to an end of the first supply passage through a first through-hole and on a side of the bottom die, and a third supply passage connected to an end of the second supply passage through a second through-hole and connected to the ceramic discharge port on a side of the top die.

A first width of the first supply passage may be equal to a second width of the second supply passage, and a third width of the third supply passage may be less than the first width and less than the second width.

The first through-hole may be an oval hole, and the second through-hole may be a polygonal hole that narrows toward the third supply passage.

The active material discharge port may be configured to form the coated portion in a width direction of the electrode substrate, and an increased width portion having an increased width which, together with a width of the coated portion, is greater than a width of the active material discharge port.

The ceramic discharge port may be at a side of the active material discharge port and overlaps the increased width portion, and is configured to discharge the ceramic insulating material that has a width that is greater than the increased width of the width increased portion.

The top die and the bottom die may include the active material discharge ports configured to form coated portions on the electrode substrate, and the ceramic discharge port may be between the active material discharge ports and on an outside of the active material discharge port on an outermost portion.

The embodiments may be realized by providing an electrode plate of a rechargeable battery including a coated portion that is formed by coating an active material on an electrode substrate; an uncoated portion; and a ceramic insulation layer that is formed by discharging a ceramic insulating material to a boundary of the coated portion and the uncoated portion, wherein the coated portion further includes an increased width portion having an increased width which, together with a width of the coated portion, is greater than a width of an active material discharge port of a slot die coater, and the ceramic insulation layer has a width that is greater than the increased width of the increased width portion.

The ceramic insulation layer may be formed of the ceramic insulating material on the uncoated portion in a width direction, and on an upper surface of an end portion of the coated portion, a lower surface of the end portion of the coated portion, and a surface of the electrode substrate facing the lower surface of the end portion.

The ceramic insulation layer may include a first insulator on the uncoated portion, and a second insulator connected to the first insulator and overlapping the width increased portion.

The ceramic insulator may form a coated portion and an uncoated portion formed by coating an active material on an electrode substrate, and a ceramic insulation layer on a boundary between the coated portion and the uncoated portion, and may include 84.89 wt% of Al2O3 with a diameter D50 of 2.5 *µ*m and 15.11 wt% of PVDF.

NMP (N-Methyl-2-pyrrolidone) may be used as a solvent. A solid content in the slurry may be 13 to 30 wt%.

At least some of the above and other features of the invention are set out in the claims.

### BRIEF DESCRIPTION OF THE DRAWINGS

Features will be apparent to those of skill in the art by describing in detail example embodiments with reference to the attached drawings in which:
FIG. 1 shows a top plan view of coating of an active material slurry and a ceramic insulating material on an electrode substrate by using a slot die coater according to an embodiment.
FIG. 2 shows a cross-sectional view with respect to a line II-II of FIG. 1.
FIG. 3 shows a cross-sectional view with respect to a line III-III of FIG. 1.
FIG. 4 shows a top plan view of an overlapping portion of a coated portion formed from an active material slurry and a ceramic insulation layer formed from a ceramic insulating material in FIG. 1.
FIG. 5 shows a perspective view of a spacer for discharging a ceramic insulating material of FIG. 3 as seen from a top.
FIG. 6 shows a perspective view of a spacer for discharging a ceramic insulating material of FIG. 3 as seen from a bottom.
FIG. 7 shows an image of an electrode plate of a rechargeable battery according to an embodiment coated with an electrode substrate by use of a slot die coater according to an embodiment.
FIG. 8 shows a cross-sectional view with respect to a line VIII-VIII of FIG. 7.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

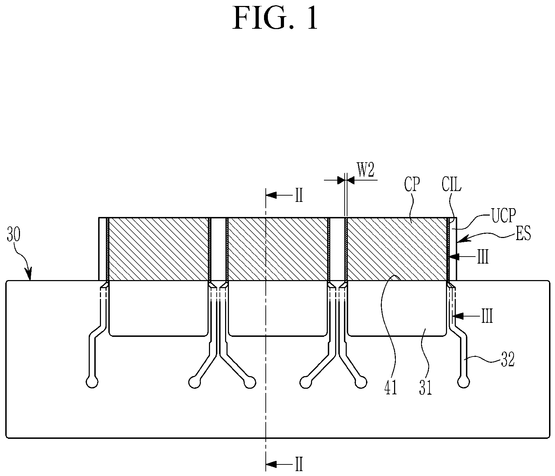

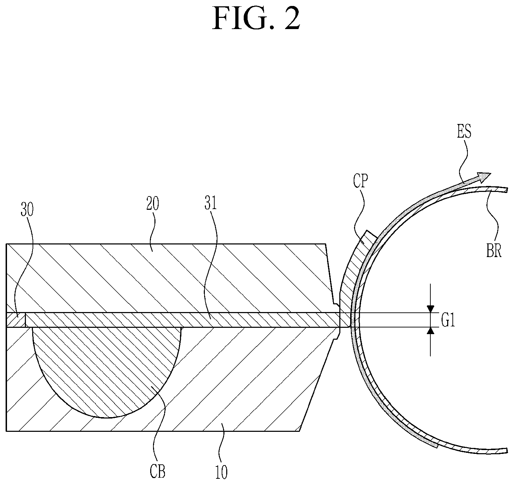

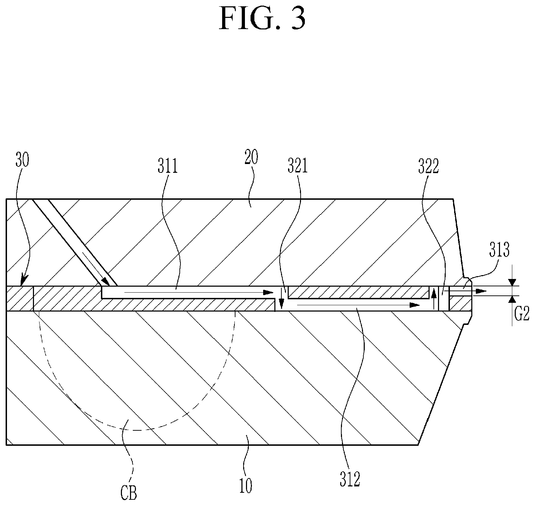

FIG. 1 shows a top plan view of coating of an active material slurry and a ceramic insulating material on an electrode substrate by using a slot die coater according to an embodiment, FIG. 2 shows a cross-sectional view with respect to a line II-II of FIG. 1, and FIG. 3 shows a cross-sectional view with respect to a line III-III of FIG. 1.

Referring to FIG. 1 to FIG. 3, the slot die coater according to an embodiment may include a bottom die 10, a top die 20, and a spacer 30. In an implementation, the slot die coater may apply an active material slurry onto the electrode substrate ES to form multiple columns of coated portions CP on the electrode substrate ES, and may apply a ceramic insulating material to form a ceramic insulation layer CIL.

In an implementation, the slot die coater may form three coated portions CP and six ceramic insulation layers CIL on one electrode substrate ES. The present disclosure may be applied to the slot die coater forming three or more/less coated portions on the electrode substrate, and the number of the ceramic layers may be set according to the number of the coated portions.

The bottom die 10 and the top die 20 may be arranged in a top-bottom direction (e.g., in a vertically overlapping relationship) and may be combined or coupled to each other. The coupled bottom die 10 and top die 20 may coat the supplied active material slurry onto the electrode substrate ES, the active material slurry having passed through a chamber CB in the bottom die 10, an active material discharge portion 31 set by a spacer 30, and an active material discharge port 41. In an implementation, the electrode substrate ES may be supported by or on a backup roll BR and may progress or be moved to thus form a coated portion CP.

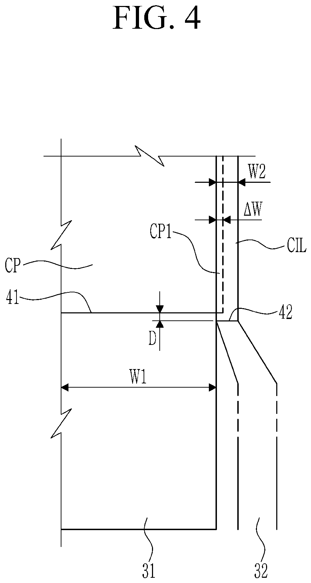

The coupled bottom die 10 and top die 20 may discharge the ceramic insulating material (supplied from or through the top die 20) to the electrode substrate ES, the ceramic insulating material having passed through the ceramic material discharge portion 32 of the spacer 30 and the ceramic discharge port 42 (see FIG. 4). In an implementation, the electrode substrate ES may be supported by the backup roll BR and may progress or be moved to thus form a ceramic insulation layer CIL. The ceramic insulation layer CIL may be at a boundary of the coated portion CP and the uncoated portion UCP.

In an implementation, the spacer 30 may include an active material discharge portion 31 between the bottom die 10 and the top die 20, an active material discharge port 41 for discharging the active material slurry (having passed through the active material discharge portion 31), a ceramic material discharge portion 32 between the bottom die 10 and the top die 20, and a ceramic discharge port 42 for discharging the ceramic insulating material (having passed through the ceramic material discharge portion 32). For ease of description, FIG. 1 shows the spacer 30 and omits the bottom die 10 and the top die 20.

The spacer 30 may form a first gap G1 at the active material discharge port 41 set by the bottom die 10, the top die 20, and the active material discharge portion 31, and may form a second gap G2 at the ceramic discharge port 42 set by the bottom die 10, the top die 20, and the ceramic material discharge portion 32. The second gap G2 may be less or smaller than the first gap G1 (G2<G1).

The second gap G2 may be above 1/2 the height of the entire height of the first gap G1 (top-bottom direction in FIG. 2 and FIG. 3), e.g., a bottom end of the second gap G2 may be higher or farther from the bottom die 10 than a center of the first gap G1 in a heightwise direction. In an implementation, the ceramic discharge port 42 may be formed corresponding to a higher or upper position of the active material discharge port 41 so the ceramic insulation layer CIL may be formed by overlapping the ceramic insulating material on the coated portion CP (that has been formed by material discharged from the active material discharge port 41).

In an implementation, the slot die coater according to an embodiment may form the coated portion CP on the electrode substrate ES, and may simultaneously form the ceramic insulation layer CIL at the boundary between the coated portion CP and the uncoated portion UCP. In an implementation, the ceramic insulating material may be alumina or boehmite, and the particle diameter D50 may be at least 2.0 µm.

FIG. 4 shows a top plan view of an overlapping portion of a coated portion of an active material slurry and a ceramic insulation layer caused by a ceramic insulating material in FIG. 1. Referring to FIG. 1 to FIG. 4, the active material discharge port 41 may be at a center of the electrode substrate ES in a width direction with reference to the active material discharge port 41 and the ceramic discharge port 42.

The ceramic discharge port 42 may be at both sides of the active material discharge port 41 in the width direction, and may form the ceramic insulation layer CIL by overlapping the ceramic insulation layer CIL on the coated portion CP at respective ends in the width direction. In an implementation, the ceramic discharge port 42 may be at both sides of one active material discharge port 41.

The active material discharge port 41 may form the coated portion CP in or having a width in the width direction of the electrode substrate ES, and the active material slurry may further form an increased width portion CP1 having a width (ΔW). In an implementation, the coated portion CP and the increased width portion CP1 may have a total width (W1+ ΔW or W1+ 2ΔW (e.g., if the increased width portion CP1 is at both sides of the coated portion CP)) (together) that is greater than the width W1 of the active material discharge port 41, e.g., due to the fluidity of the material discharged from the active material discharge port 41.

In an implementation, the coated portion CP may be discharged from the active material discharge port 41 and may spread in the width direction to include the increased width portion CP1 having the width (ΔW) such that the total width (e.g. W1+ ΔW) may be slightly greater than the width W1 of the active material discharge port 41.

The ceramic discharge port 42 may be provided in close contact with, or adjacent to, a side of the active material discharge port 41, and may overlap or be aligned with the increased width portion CP1. In an implementation, the ceramic insulating material with a width W2 (that is wider than the width (ΔW) of the increased width portion CP1) may be discharged onto the increased width portion CP1 and the uncoated portion UCP.

In an implementation, the ceramic discharge port 42 may correspond to, or be aligned with, the increased width portion CP1 and the uncoated portion UCP, and may discharge the ceramic insulating material to form a layer having the width W2 that is wider than the width (ΔW) of the increased width portion CP1, and may form the ceramic insulation layer CIL. In an implementation, the ceramic insulation layer CIL may be formed on the increased width portion CP1 of the coated portion CP and on the uncoated portion UCP.

The ceramic insulation layer CIL may electrically insulate the increased width portion CP1 (at both ends of the width direction on the electrode substrate ES having the coated portion CP and the increased width portion CP1 thereon), thereby helping to prevent short circuits between electrode plates of the positive electrode or the negative electrode in an electrode assembly that includes the electrode substrate ES.

The ceramic insulation layer CIL may help secure stack burr quality and short circuit stability, thereby strengthening process safety. In an implementation, a rechargeable battery may include the electrode plates of the negative and positive electrodes manufactured in this way, and the short circuit may be effectively prevented between the electrode plates of the negative and positive electrodes, and electrical insulation performance may be strengthened.

With respect to the discharge direction (from the bottom to the top in FIG. 4), the ceramic discharge port 42 may be further rearward than the active material discharge port 41 by a distance (D), e.g., the opening of the ceramic discharge port 42 may be spaced back from the opening of the active material discharge port 41 by the distance (D). In an implementation, the ceramic insulating material may be discharged from the ceramic discharge port 42 after the coated portion CP and the increased width portion CP1 have been formed by material discharged from the active material discharge port 41.

In an implementation, the ceramic insulating material of the ceramic insulation layer CIL may not mix with the increased width portion CP1 of the active material and may form a separate layer. In such an implementation, the short circuit may be more effectively prevented between the electrode plates of the positive and negative electrodes, and electrical insulation performance may be further strengthened.

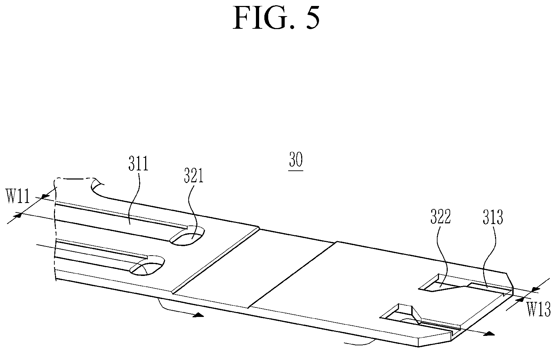

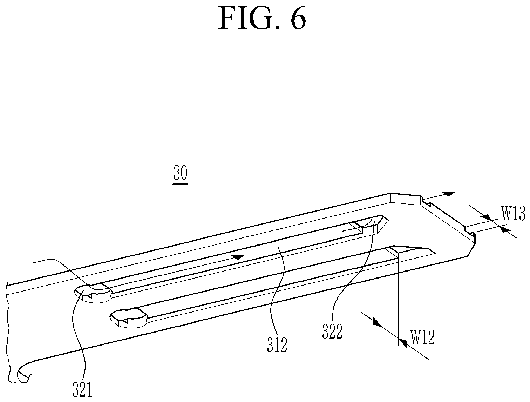

FIG. 5 shows a perspective view of a spacer for discharging a ceramic insulating material of FIG. 3 as seen from a top, and FIG. 6 shows a perspective view of a spacer for discharging a ceramic insulating material of FIG. 3 as seen from a bottom. Referring to FIG. 3, FIG. 5, and FIG. 6, the spacer 30 may include a first supply passage 311, a second supply passage 312, a third supply passage 313, a first through-hole 321, and a second through-hole 322.

The first supply passage 311 may be on a side of the spacer facing the top die 20, and may be set together with a lower surface of the top die 20, and the supplied ceramic insulating material may firstly pass through the first supply passage 311. An upper end of the first through-hole 321 may be connected to or in fluid communication with an end of the first supply passage 311 to provide a path for moving the ceramic insulating material to a side of the spacer 30 facing the bottom die 10 (from the side of the spacer facing the top die 20).

The second supply passage 312 may be in fluid communication with a lower end of the first through-hole 321, may be on the side of the spacer facing the bottom die 10, and may be set together with an upper surface of the bottom die 10, and the ceramic insulating material having passed through the first supply passage 311 and the first through-hole 321 may pass through the second supply passage 312.

A lower end of the second through-hole 322 may be in fluid communication with an end of the second supply passage 312, and may provide a path for moving the ceramic insulating material to the side of the spacer facing the top die 20 from the side of the spacer facing the bottom die 10.

The third supply passage 313 may be in fluid communication with an upper end of the second through-hole 322 and may be set together with the lower surface of the top die 20, and the ceramic insulating material (having passed through the second supply passage 312 and the second through-hole 322) may pass through the third supply passage 313.

The third supply passage 313 may be in fluid communication with the ceramic discharge port 42 and may help form the ceramic insulation layer CIL having the width W2.

A first width W11 of the first supply passage 311 and a second width W12 of the second supply passage 312 may be the same, and a third width W13 of the third supply passage 313 may be less than each of the second width W12 and the first width W11. In an implementation, the first through-hole 321 may be an oval hole, and the second through-hole 322 may be a polygonal hole that narrows along a side thereof that is adjacent to the third supply passage 313.

In an implementation, the ceramic insulating material may sequentially pass through the first supply passage 311, the first through-hole 321, the second supply passage 312, the second through-hole 322, and the third supply passage 313, may be narrowed to the third width W13 from the first and second widths W11 and W12, may pass through the ceramic discharge port 42 (e.g., while being pressurized), and may be supplied.

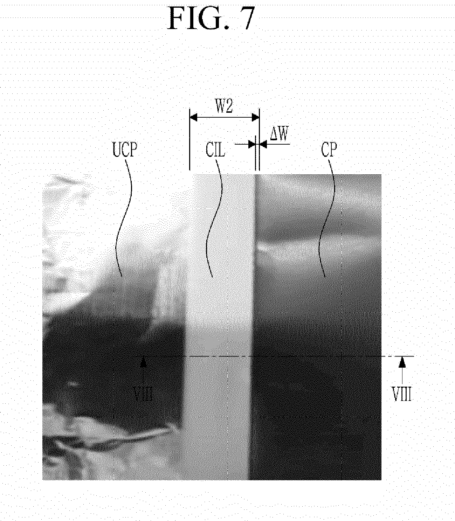

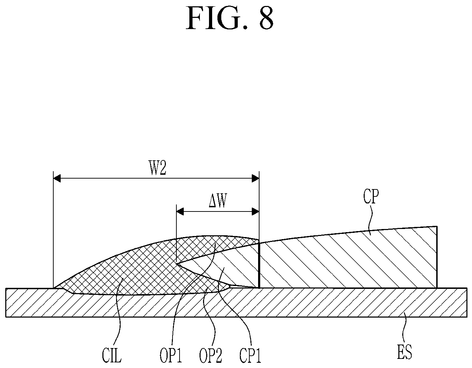

FIG. 7 shows an image of an electrode plate of a rechargeable battery according to an embodiment coated on an electrode substrate by use of a slot die coater according to an embodiment, and FIG. 8 shows a cross-sectional view with respect to a line VIII-VIII of FIG. 7.

Referring to FIG. 7 and FIG. 8, the ceramic insulation layer CIL formed from the ceramic insulating material supplied to the slot die coater according to an embodiment may be on the uncoated portion UCP in the width direction, and may be formed from the ceramic insulating material supplied to a space on an upper surface of an end portion of the coated portion CP, and a lower surface of an end of the coated portion CP and a surface of the electrode substrate ES facing each other.

Regarding the electrode plate of the rechargeable battery according to an embodiment, the coated portion CP may further include the increased width portion CP1 having the width (ΔW) extending beyond the width W1 of the active material slurry discharged from the active material discharge port 41 of the slot die coater. In an implementation, the active material slurry may receive resistance due to a frictional force with the uncoated portion UCP at the end portion of the coated portion CP, and may form the increased width portion CP1 that is convex to a side by its cohesive force.

The ceramic insulation layer CIL may be formed on the uncoated portion UCP to have a width W2 that is greater than the increased width (ΔW) of the increased width portion CP1. The ceramic insulation layer CIL may include a first insulator or a first overlapping portion OP1 on an upper surface of the increased width portion CP1 and a second insulator or a second overlapping portion OP2 in a space between a lower surface of the increased width portion CP1 and a surface of the electrode substrate ES, and the first and second overlapping portions OP1 and OP2 may be connected on the uncoated portion UCP.

In an implementation, the ceramic insulating material may be supplied as the increased width portion CP1 is formed, so the first and second overlapping portions OP1 and OP2 may be formed in the height direction with the increased width portion CP1 therebetween.

The first and second overlapping portions OP1 and OP2 might not allow the ceramic insulating material of the ceramic insulation layer CIL to be mixed with the increased width portion CP1 of the active material, but rather may form an additional layer. In an implementation, the electrode plates (of the positive and negative electrodes) having the increased width portion CP1 and the ceramic insulation layer CIL (including the first and second overlapping portions OP1 and OP2) may more efficiently prevent the short-circuit from being generated therebetween in the rechargeable battery, and thereby reinforcing electrical insulation performance.

Referring to Table 1, the ceramic insulator for forming a ceramic insulation layer (CIL) may include 84.89 wt% of Al₂O₃ with a diameter D50 of 2.5 *µ*m and 15.11 wt% of PVDF. NMP (N-Methyl-2-pyrrolidone) may be used as a solvent, and a very small amount of additive (G-NMP) may be used. A solid content in the slurry of the ceramic insulator may be 13 to 30 wt%. The ceramic may be aluminum or boehmite. A binder PVDF may include 14.29 wt% of S6020 and 0.82 wt% of S5130.

The ceramic insulator according to the comparative example may include 92.8 wt% of Al₂O₃ with the diameter D50 of 1.2. *µ*m and 7.2 wt% of PVDF. NMP (N-Methyl-2-pyrrolidone) may be used as the solvent, and a very small amount of additive (G-NMP) may be used. The solid content in the slurry of the ceramic insulator may be 10 wt%. The binder PVDF may include 7.02 wt% of S6020 and 0.18 wt% of S5130.

**Table 1**

| Classify | Battery types | Width (W2) (mm) | Thickness (*µ*m) (both sides) | Overlap (ΔW) (mm) | Solid content (wt%) | Verified content (insulated thickness) |
|---|---|---|---|---|---|---|
| Comparative example 1 | Pouch | 2 | 100±3 | 0.5 | 10 | X |
| Comparative example 2 | Pouch | 2.7 | 75±3 | 0.5 | 10 | X |
| Embodiment 1 | Pouch | 2.8 | 5513 | 0.5 | 13 | O |
| Embodiment 2 | Circular | 3.5 | 2813 | 0.5 | 20 | O |
| Embodiment 3 | Pouch | 3.5 | 40±3 | 0.8 | 30 | O |
| Embodiment 4 | Circular | 3.2 | 23±3 | 0.8 | 13 | O |
| Embodiment 5 | Pouch | 3.0 | 40±3 | 0.5 | 30 | O |
| Embodiment 6 | Circular | 6.0 | 20±3 | 0.5 | 13 | O |

When the ceramic insulation layer is formed by applying the spacer 30 according to an embodiment, the ceramic insulator according to the first and second comparative examples has formed the ceramic insulation layer with the width W2 of 2mm to 2.7mm, the thickness of 75 ±3 *µ*m to 100±3 *µ*m, the overlapping width ΔW of 0.5mm, and the solid content of 10 wt%.

The ceramic insulator according to the first and second comparative examples forms the ceramic insulation layer with the thickness of equal to or greater than 60 *µ*m, so an appropriate sum of the thickness of both sides is not formed.

When the ceramic insulation layer is formed by applying the spacer 30 according to an embodiment, the ceramic insulator according to the first to sixth embodiments has formed the ceramic insulation layer with the width W2 of 2.8mm to 6.0mm, the thickness of 30±3 *µ*m to 55±3 *µ*m, the overlapping width ΔW of 0.5mm to 0.8mm, and the solid content of 10 to 30 wt%.

The first to sixth embodiments forms the ceramic insulation layer with the thickness of equal to less than 55 *µ*m and 40 *µ*m, so the appropriate sum of the thickness of both sides is formed. That is, as the spacer 30 according to an embodiment and the ceramic insulator according to the first to sixth embodiments are used, the ceramic insulation layer may be stably formed on the width increased portion CP1, and the first overlapping portion OP1 and the second overlapping portion OP2 may be stably formed.

By way of summation and review, an electrode plate of a rechargeable battery may have risky factors on ignition which could be caused by generation of burrs of the electrode substrate and short-circuits that may be generated between the electrode plates of the positive electrode and the negative electrode. An electrical insulation on the electrode plates of the positive electrode and the negative electrode may be used to help improve safety of the rechargeable battery and performance thereof.

One or more embodiments may provide a slot die coater for coating active material slurry on an electrode substrate of a rechargeable battery.

One or more embodiments may provide a slot die coater for forming a coated portion with an active material slurry to help prevent short-circuit between electrode plates of a negative electrode and a positive electrode, and forming a ceramic insulation layer with a ceramic insulating material.

The slot die coater according to an embodiment may include the active material discharge port at the center of the electrode substrate in the width direction and may include the ceramic discharge port on the respective sides of the active material discharge port in the width direction to overlap the ceramic insulation layer and the coated portion at the respective ends in the width direction. Therefore, the electrode plates of the negative electrode and the positive electrode having the ceramic insulation layer may help efficiently prevent the short-circuit between the negative electrode and the positive electrode in the rechargeable battery.

The present disclosure has been made in an effort to provide a ceramic insulator for forming a ceramic insulation layer using the slot die coater.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A slot die coater, comprising:
a bottom die and a top die disposed in a top-bottom direction and coupled to each other, the bottom die and the top die being configured to:
form a coated portion by coating an active material slurry on an electrode substrate, and
discharge a ceramic insulating material to a boundary of the coated portion and an uncoated portion to form a ceramic insulation layer; and
a spacer including:
an active material discharge portion between the bottom die and the top die, the active material discharge portion providing an active material discharge port that is configured to discharge the active material slurry, and
a ceramic material discharge portion providing a ceramic discharge port that is configured to discharge the ceramic insulating material,
wherein:
the active material discharge port is at a center of the electrode substrate in a width direction,
the ceramic discharge port is on respective sides of the active material discharge port in the width direction, and
the ceramic discharge port is configured to form the ceramic insulation layer by overlapping the ceramic insulation layer on the coated portion at respective ends in the width direction.

2. The slot die coater as claimed in claim 1, wherein the spacer provides:
a first gap at the active material discharge port, and
a second gap at the ceramic discharge port, the second gap being smaller than the first gap.

3. The slot die coater as claimed in claim 2, wherein the second gap is at a position that is above 1/2 a height of the first gap.

4. The slot die coater as claimed in any one of the preceding claims, wherein:
the active material discharge port is configured to discharge an active material slurry that has passed through a chamber in the bottom die, and
the ceramic discharge port is configured to discharge a ceramic insulating material supplied to the spacer and that has passed through the top die.

5. The slot die coater as claimed in claim 4, wherein the spacer includes:
a first supply passage on a side of the top die,
a second supply passage connected to an end of the first supply passage through a first through-hole and on a side of the bottom die, and
a third supply passage connected to an end of the second supply passage through a second through-hole and connected to the ceramic discharge port on a side of the top die.

6. The slot die coater as claimed in claim 5, wherein:
a first width of the first supply passage is equal to a second width of the second supply passage, and
a third width of the third supply passage is less than the first width and is less than the second width.

7. The slot die coater as claimed in claim 6, wherein:
the first through-hole is an oval hole, and
the second through-hole is a polygonal hole that narrows toward the third supply passage.

8. The slot die coater as claimed in any one of the preceding claims,
wherein the active material discharge port is configured to form:
the coated portion in a width direction of the electrode substrate, and
an increased width portion having an increased width which, together with a width of the coated portion, is greater than a width of the active material discharge port.

9. The slot die coater as claimed in claim 8, wherein the ceramic discharge port is:
at a side of the active material discharge port and overlaps the increased width portion, and
configured to discharge the ceramic insulating material that has a width that is greater than the increased width of the width increased portion.

10. The slot die coater as claimed in any one of the preceding claims, wherein:
the top die and the bottom die include the active material discharge ports configured to form coated portions on the electrode substrate, and
the ceramic discharge port is between the active material discharge ports and on an outside of the active material discharge port on an outermost portion.

11. An electrode plate of a rechargeable battery, comprising:
a coated portion that is formed by coating an active material on an electrode substrate;
an uncoated portion; and
a ceramic insulation layer that is formed by discharging a ceramic insulating material to a boundary of the coated portion and the uncoated portion,
wherein:
the coated portion further includes an increased width portion having an increased width which, together with a width of the coated portion, is greater than a width of an active material discharge port of a slot die coater, and
the ceramic insulation layer has a width that is greater than the increased width of the increased width portion, and optionally wherein the ceramic insulation layer is:
formed of the ceramic insulating material on the uncoated portion in a width direction, and
on an upper surface of an end portion of the coated portion, a lower surface of the end portion of the coated portion, and a surface of the electrode substrate facing the lower surface of the end portion.

12. The electrode plate as claimed in claim 11, wherein the ceramic insulation layer includes:
a first insulator on the uncoated portion, and
a second insulator connected to the first insulator and overlapping the width increased portion.

13. A ceramic insulator wherein the ceramic insulator forms a coated portion and an uncoated portion formed by coating an active material on an electrode substrate, and a ceramic insulation layer on a boundary between the coated portion and the uncoated portion, and includes 84.89 wt% of Al2O3 with a diameter D50 of 2.5 *µ*m and 15.11 wt% of PVDF.

14. The ceramic insulator as claimed in claim 13, wherein
NMP (N-Methyl-2-pyrrolidone) is used as a solvent.

15. The ceramic insulator as claimed in claim 13 or claim 14, wherein
a solid content in the slurry is 13 to 30 wt%.
